# EUROPÄISCHE PATENTSCHRIFT

(11) **EP 0 702 891 B1**
(45) Veröffentlichungstag und Bekanntmachung des Hinweises auf die Patenterteilung: **12.05.1999**
(21) Anmeldenummer: 95113347.9
(22) Anmeldetag: 25.08.1995
(51) Int. Cl.: A01D 41/12

(54) **Mähdrescherbetrieb mit Betriebsdatenkataster**
Combine operation with operating data registry
Opération de moissonneuse-batteuse à registre de données opératoires

(30) Priorität: 07.09.1994 DE 4431824
(43) Veröffentlichungstag der Anmeldung: 27.03.1996
(73) Patentinhaber: CLAAS KGaA, 33428 Harsewinkel (DE)
(72) Erfinder: Böttinger, Stefan, Dr., D-33647 Bielefeld (DE)
(74) Vertreter: Hanewinkel, Lorenz, Dipl.-Phys.

(56) Entgegenhaltungen:
- WO-A-86/05353
- DE-C- 4 341 834
- GB-A- 2 193 871
- US-A- 4 296 409

## Beschreibung

Die Erfindung betrifft ein Verfahren zum Betrieb eines Mähdreschers, der laufend zur Ernteleistungsoptimierung durch einen Steuerprozessor mit Soll- und/oder Grenzbetriebsdaten von einem Bediener extern gesteuert sowie intern bei laufender Messung und Auswertung von Ist-Betriebsdaten, insbes. Fahrdaten, geregelt betrieben wird, wobei laufend die absoluten und/oder relativen Ortskoordinaten des Mähdreschers erfaßt und diesen zugeordnet die jeweiligen flächenspezifischen Ertragsmeßdaten, insbesondere als ein Ertragsdatenkataster, zur Verwendung als historisches Datenkataster gespeichert werden und der Steuerprozessor des Mähdreschers das historische Datenkataster im Zugriff hat und mit den jeweiligen Ortskoordinaten des Mähdreschers, verknüpft mit dessen jeweiligen Fahrdaten, dort gespeicherte historische Daten adressiert und liest und daraus neue Soll- oder Grenzbetriebsdaten bestimmt und aktuell vorgibt.

Ein derartige Mähdrescher ist aus der WO86/05353 bekannt. Von diesem werden laufend Wegmeßsignale und/oder Funkortungssignale aufgenommen und diesen zugeordnet eine laufende Katastererstellung der spezifischen Ertragsmeßdaten vorgenommen. Diese Ertragskataster dient der späteren Bestimmung eines optimalen Düngemittel- oder Schädlingsbekämpfungsmittel-Einsatzes und/oder einer Steuerung einer Sämaschine oder einer Bodenbearbeitungs-maschine um dem spezifischen Ertrag gemäß, der die Bodenart und -Beschaffenheit wiederspiegelt, geeignet das Saatgut auszubringen oder die Bearbeitungsintensität zu steuern.

Weiterhin ist aus der DE 42 23 585 A1 eine Vorrichtung zum Ausbringen von landwirtschaftlichem Material bekannt, dessen Steuerung mittels in einem Grenzkataster gehaltenen Feldkonturen und eines Funkortungsgerätes erfolgt, so daß das Material nur innerhalb der Kontur und nahe bis an diese ausgebracht wird. Es ist auch vorgesehen, den Konturverlauf und den Standort des Streugerätes auf einem Bildschirm dem Bediener darzubieten.

Weiterhin ist in der DE P 43 41 834.1 der Anmelderin ein Mähdrescher der eingangs bezeichneten Art beschrieben, der eine prozessorbetriebene Steuer- und Regelvorrichtung umfaßt, die einen optimalen Erntebetrieb durch eine interaktive Bedienersteuerung erbringt und dem Bediener laufend Soll-, Grenz- und Ist-Betriebsdaten in Bildschirmmasken mit Piktogrammen und in alpha-numerischen Anzeigefeldern darbietet sowie ein Erntekataster zur späteren Verwendung erstellt.

Es ist Aufgabe der Erfindung, eine weitere Entlastung des Mähdrescherfahrers zu erreichen und eine noch höhere Optimierung des Erntebetriebes durch Erreichung eines hohen Durchsatzes bei relativ geringem flächenspezifischen Ernteverlust zu erreichen, wenn in einem Feldgebiet unterschiedliche Erntegutzustände oder -arten anzutreffen sind, sowie Überlastfälle und Maschinenschaden zu vermeiden.

Die Lösung der Aufgabe ist dadurch gegeben, daß der Steuerprozessor die im historischen Datenkataster gespeicherten Daten jeweils den aktuellen Ortskoordinaten vorgreifend adressiert und liest.

Vorteilhafte Augestaltungen sind in den Unteransprüchen angegeben.

Das wesentliche Prinzip besteht darin, daß die Katasterdaten von früheren Mähdrescherdurchläufen aus Vorjahren oder von vorherigen Durchläufen benachbarter Schneisen als Grundlage für eine Gewinnung von Soll- und/oder Grenzdaten genutzt werden, wodurch eine Regelungsoptimierung erreicht wird, indem die Daten vorausschauend ausgewertet werden und bereits vor dem Erreichen eines kritischen Feldbereiches, in welchem z.B. ein dichterer Bestand vorliegt oder das Getreide in einer ungünstigen Richtung liegt oder das Gelände in der Hangneigung wechselt, eine Anpassung der Betriebsbedingungen erfolgt, so daß insbesondere eine Überlastung oder eine Beschädigung des Dresch- oder Mähwerkes ausgeschlossen wird. Insbesondere wird dabei, wenn vorher mit hoher Geschwindigkeit in einem schwachen Bestand geerntet wurde, die Geschwindigkeit herabgesetzt oder bei Änderung der Hangneigung oder Bodenwelligkeit die Schneidwerkneigungsregelung und/oder die Schnitthöhenregelung mit neuen Soll- oder Grenzdaten versorgt.

Für die möglichst ortgenaue Vorgabe der Betriebsgrößen ist es zum einen notwendig, daß die katasterisierten Daten bezüglich des wahren Entstehungsortes, also korrigiert um den Weg den der Mähdrescher während der Verzögerung vom Schnitt des Erntegutes bis zu einer jeweiligen Meßgrößengewinnung zurücklegt, ausgewertet werden und zum anderen, daß die Regelzeitkonstante der jeweiligen Einstellvorrichtung berücksichtigt wird, also die Koordinaten des Katasterzugriffs entsprechend dem Fahrweg, den der Mähdrescher während der Regelzeitkonstanten zurücklegt, vorverlegt werden, wenn die neue Einstellung eine schadensträchtigere ist also z. B. zu einer höheren Geschwindigkeit oder einer geringeren Schneidhöhe führt.

Sofern die aus den historischen Daten ermittelten Soll- oder Grenzbetriebsdaten nicht unmittelbar einem Regler Zugeführt werden sondern dem Bediener zur Einstellung durch Visualisierung empfohlen werden, ist auch dessen Reaktionszeit zu berücksichtigen.

Eine weitere Vorausschau in der Bildung der Soll- und Grenzdaten ist dann vorgesehen, wenn nicht von einem Vollkataster sondern von einem Teilkataster der letzten benachbarten Ernteschneisen ausgegangen wird, indem eine Analyse der Datenänderungen jeweils in den angrenzenden benachbarten vor- und rückliegenden Schneisenbereichen auf einen zur Schneisenrichtung vorhandenen Schrägverlauf einer Boden- oder Erntegutänderung erfolgt und demgemäß eine Extrapolation auf den jeweiligen für die Datenanwendung relevanten Mähdrescherort unter Berücksichtigung der Regelzeitkonstanten und des damit verbundenen Fahrweges sowie einer Schadensrelevanz der vorgesehenen Einstellung erfolgt. Hierdurch stellen sich die Betriebswerte auf einen zur Fahrtrichtung schrägen Erntegutänderungsverlauf, also einer schräg zur Fahrtrichtung verlaufenden Fertilitätsgrenze, automatisch ein; eine solche Betriebs-Einstellung ist wegen einer mangelnden Beobachtungsmöglichkeit dem Fahrer oft nicht von Hand möglich,da der zurückgelegte Weg bis zu einer Meßwertgewinnung und der weitere Weg bis zur Maschinenendeinstellung jeweils ca. 50 m betragen.

Als Betriebsdaten werden vorteilhaft nicht nur die flächenspezifischen Kornerntemengen sondern auch die relativen Kornverluste und die Strohdurchsatzmengen und u.U. auch die Soll- und Grenzwerte der Betriebsdaten im Kataster erfaßt. Hierdurch kann eine Betriebssteuerung nach verschiedenen Kriterien, z.B. hohem Durchsatz oder geringem Verlust an Getreide oder an Stroh, gewählt werden. Die ermittelten Grenz- und Soll-Betriebsdaten werden vorteilhaft wahlweise unmittelbar der Regelvorrichtung zugeführt oder dem Fahrer in seiner Kanzel zur Anzeige gebracht. In jedem Fall wird dem Fahrer aus Sicherheitsgründen eine Übersteuerungsmöglichkeit per Hand gegeben, so daß er die Geschwindigkeit herabsetzen oder den Mähdrescher stilsetzen kann sowie das Schneidwerk anheben kann, um Hindernissen oder Überlastungen zu entgehen.

Selbstverständlich lassen sich in gleicher Weise wie die Fahrgeschwindigkeit, die Schnittbreite und -höhe auch andere Einstellgrößen des Mähdreschers, wie die Trommeldrehzahl, die Gebläsedrehzahl, die Einzugsschneckendrehzahl, die Elevatorgeschwindigkeit und die Siebeinstellung aufgrund von Katasterdaten vorgeben. Hierbei sind jeweils die zugehörigen Durchlaufzeiten des Erntegutes bis zur Meßstelle einer zugehörigen Meßgröße und die Einstellzeiten der Vorrichtung auf Gegensteuerungsmaßnahmen entsprechend zu berücksichtigen, wie analog in den Beispielen gezeigt ist.

Eine besonders speichersparende Katasterisierung wird dadurch erreicht, daß jeweils nur dann ein Betriebsdaten-Koordinatenpaar gespeichert wird, wenn ein abzuspeicherndes Betriebsdatum sich um einen vorgegebenen relativen oder absoluten Betrag geändert hat. Dies Art der Speicherung erleichtert auch die Extrapolation von Betriebsdatenänderungen aus benachbarten Schneisen in die laufende Fahrposition, da die gespeicherten Daten den größeren Betriebsdatenänderungen zugeordnet sind und die gespeicherten Koordinatendifferenzen zwischen den Punkten ähnlicher Änderungen der Betreibsdaten in den benachbarten abgeernteten Schneisen auf die laufend bearbeitete Schneise zu übertragen sind und dazu die zugehörigen Betriebsdaten einfach zu übernehmen sind.

Die Ortskoordinaten benachbarter Schneisen werden jeweils auf einen Anfangspunkt bezogen, so daß auch bei einer wegabhängigen Koordinatenart die Speicherung unabhängig von der Fahrrichtung des Mähdreschers auf den jeweils wahren Ort bezogen erfolgt.

Bei Mähdreschern wird angestrebt, eine maximale Durchsatzleistung bei noch akzeptablen Kornverlusten zu erreichen bzw. eine vom Fahrer als günstig erkannte Durchsatzleistung beizubehalten. Die Arbeitsorgane des Mähdreschers werden in ihrer Einstellung dieser Durchsatzleistung angepaßt, um so ein optimales Arbeitsergebnis zu erhalten. Sich ständig ändernde Bestandsdichten wirken sich auf einen mit konstanter Fahrgeschwindigkeit fahrenden Mähdrescher direkt auf sich ändernde Durchsatzleistungen aus. Um eine konstante Durchsatzleistung und/oder die Einstellung der Arbeitsorgane des Mähdreschers zu erhalten, muß die Fahrgeschwindigkeit und/oder die Einstellung der Arbeitsorgane des Mähdreschers gesteuert bzw. geregelt werden. Zu diesem Zweck wurden verschiedene Durchsatzmeßeinrichtungen für den Mähdrescher entwickelt. Durch darauf aufbauende Regeleinrichtungen für die Fahrgeschwindigkeit wurden z.B. erhebliche Leistungssteigerungen erzielt. Von Nachteil ist hierbei, daß der Gutdurchsatz erst gemessen werden kann, wenn das Erntegut bereits im Mähdrescher ist. So kann nur auf langwellige Bestandsschwankungen reagiert werden.

Durch die vorausschauende Auswertung der historischen Daten wird dieser Nachteil der bisherigen Rückwärtsregelung beseitigt. Es können jedoch vorteilhaft die bekannten Optimierungsstrategien der Rückwärtsregelung in einer untergeordneten Regelschleife beibehalten werden.

Vorjährige katasterisierten Betriebsdaten werden jeweils in Relation zu den aktuellen Daten gesetzt und proportional diesen angepaßt.

Arbeiten mehrere Mähdrescher auf einem Feld, benötigt nur eine Maschine ein Durchsatzmeßverfahren und die Möglichkeit zur Korrektur der vorliegenden Feldkarte. Über eine Funkverbindung können diese Korrekturen an die anderen Mähdrescher auf dem Feld, die nicht zwingend ein Durchsatzmeßverfahren aber ein Ortungs- oder Navigationssystem installiert haben müssen, weitergeleitet werden.

Die Korrekturdatenaufbereitung kann auch von einem stationären Rechner z.B. am Feldrand vorgenommen werden. Von einem Mähdrescher mit Durchsatzmeßeinrichtung und einem Ortungs- oder Navigationssystem werden Ertrags- und Positionsdaten an den stationären Rechner gesandt. Die Ertragskorrekturdaten werden an einen oder mehrere Mähdrescher auf dem Feld gefunkt. Zusätzlich zu diesen Ertragskorrekturdaten können über diese Funkstrecke auch Positionskorrekturdaten, wie sie z.B. für ein Differentielles Satellitennavigationsverfahren (DGPS) benötigt werden, gesendet werden.

Diese hier gezeigten Strategien, die die wahren Orte von Fertilitätsgrenzen, die Zeitkonstanten der Regelvorrichtungen, die gewonnenen Daten aus den Nachbarschneisen und die Gefahrenrelevanz der vorgesehenen Korrekturregelung berücksichtigen, können für jede andere Erntemaschine oder landwirtschaftliche Arbeitsmaschine, bei der eine oder mehrere Maschineneinstellungen in Abhängigkeit von einer oder mehreren mit den Fruchtbarkeitsunterschiedsdaten oder Bodendaten korrelierenden Größe gesteuert werden kann, verwendet werden.

Vorteilhafte Ausgestaltungen sind anhand der Figuren 1 bis 7 beschrieben.
- Fig. 1: zeigt ein Übersichtsschema eines Mähdreschers mit einem Multiprozessornetzwerk und Ausschnittvergrößerungen in verschiedenen Maßstäben;
- Fig. 2: zeigt eine Fahrbildmaske;
- Fig. 3: zeigt eine Feldkarte mit aktueller, künftiger und historischer Mähdrescherstellung im absoluten Koordinatennetz;
- Fig. 4: zeigt eine Feldkarte mit Extrapolationspunkten und Bahnkoordinaten;
- Fig. 5: zeigt ein Ortsschemata verschiedenen Betriebsfälle;
- Fig. 6: zeigt ein Blockschaltbild der Gesamtvorrichtung;
- Fig. 7: zeigt ein Blockschaltbild einer Vorrichtung mit einer Funkverbindung.

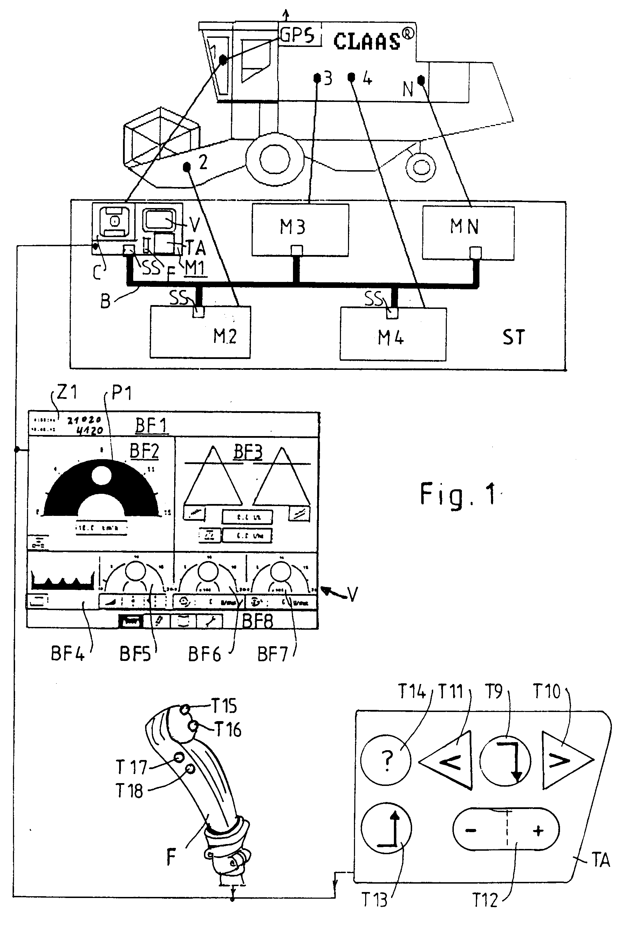

Figur 1 zeigt ein Übersichtsschema über einen Mähdrescher mit einer Steuervorrichtung (ST) mit einem Mikroprozessornetzwerk mit dem Bus (B). In der Fahrerkanzel (1) ist der Leitstandprozessor (M1) installiert, und am Schneidwerk (2) zur Schneidwersteuerung und -regelung ein zweiter Mikroprozessor (M2), am Antrieb- und Fahrwerk (3) ein dritter Mikroprozessor (M3), am Dreschwerk (4) ein vierter Mikroprozessor (M4) und am Förder- und Reinigungswerk (N) ein fünfter Mikroprozessor (MN), der die Gutströme überwacht. Jeder Mikroprozessor (M1 - MN) ist über einen Schnittstellenschaltkreis (SS) an den zentralen Nachrichtenbus (B) angeschlossen. Der Leitstandprozessor (M1) steuert das Bildschirmgerät (V) an und wird durch eine Steuertastatur (TA) mit sieben Tasten (T9 - T14) für den Bildschirmdialogbetrieb sowie durch ergonomisch am Fahrhebel (F) angeordnete Schneidwerkstelltasten (T15 - T18) angesteuert. Ein Ortungsgerät (GPS) ist installiert, das die Ortskoordinaten laufend an der Leitstandprozessor (M1) überträgt.

Die Bildschirm-Anzeigebereiche sind die Uhrzeit- und Datumsanzeige sowie die Flächen- und Fahrwegangabe (BF1), die Fahrgeschwindigkeitsanzeige (BF2), die Anzeige der Körnerverlust und Ernteleistung (BF3), die Anzeige der Arbeitsbreite (Teilbreite) (BF4), die Schnitthöhen-Richtwerkskala mit der Anzeige der Schnitthöhen-Sollwerte (BF5), die Dreschtrommeldrehzahl-Anzeige (BF6), die Gebläsedrehzahl-Anzeige (BF7) und die Auswahlleiste der Hauptmenüs (BF8). Die Tastenfunktionen vom Tastenfeld (TA) sind die Bestätigungstaste (T9) zum Öffnen von Menüs, zum Bestätigen vom Einstellwerk und zum Starten und Stoppen von Aufträgen, die Cursortaste "Rechts" (T10), die Cursortaste "Links" (T11) zur Auswahl von Menüpunkten; vom ersten Menüpunkt gelangt man mit "Links" zum letzten Punkt und umgekehrt; die +/- Wipptaste (T12) zur Verstellung von Werten, die Rücksprungtaste (T13) in die nächst höhere Menüstufe und die Hilfetaste (T14) zum Aufruf des Erklärungstextes zum aktuellen Menüpunkt. Nochmaliges Drücken dieser Hilfetaste führt zurück zum Menüpunkt. Werden die Tasten länger gedrückt gehalten, so wiederholt sich die Tastenfunktion automatisch mehrmals. Am Fahrhebel (F) sind die Tasten Drucktaster-Schneidwerkheber (T15), Drucktaster-Schneidwerksenken (T16), Drucktaster-Schnitthöhenvorwahl-Automatik-ein (T17) und Drucktaster-Kontur-Automatik-ein (T18) angeordnet.

Auf dem Bildschirm (V) sind die acht Bildfelder (BF1 - BF8) angeordnet, in denen Piktogramme (P1) zur Analogdarstellung von Betriebsdaten, Zahlenangaben (Z1) zur numerischen Datenausgabe und in anderen Betriebszuständen Textangaben dargestellt werden.

Die Bildbereiche der Uhrzeitanzeige (BF1) und zur Menüauswahlanzeige (BF8) sind immer gleichartig vorhanden, worin die Uhrzeit und das Datum stets von der elektronischen internen Uhrzeit aktualisiert dargestellt werden und die Menüanzeige abhängig von der Tastenbetätigung der Steuertastatur (TA) erfolgt, indem die Hauptmenüanzeigesymbole aktuell massiv und ansonsten transparent dargestellt sind.

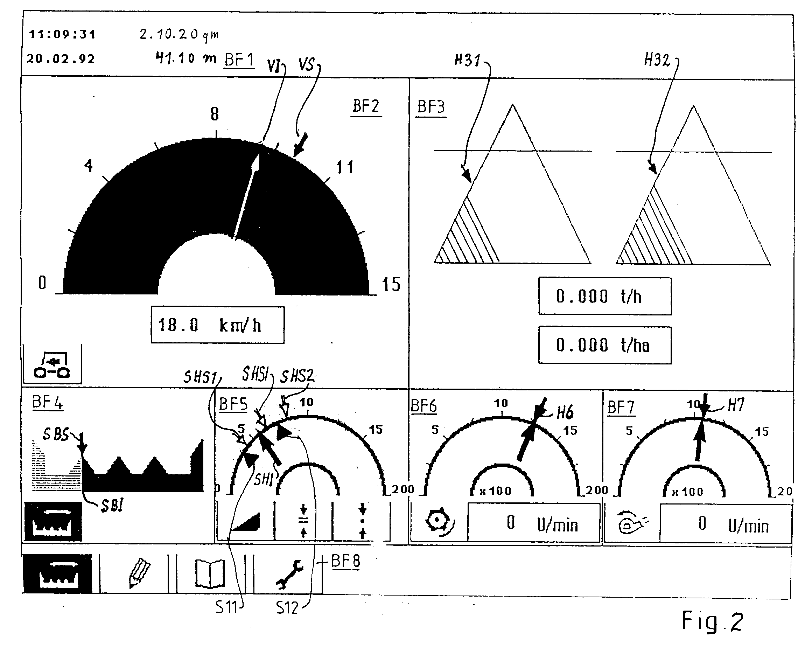

Details sind im Erntebild, Figur 2, gezeigt, wo links der Tachometer und wo im rechten großen Bildfeld (BF3) in zwei Dreieckpiktogrammen laufend die Körnerverlustrate und die Ernteleistung dargestellt werden. In den kleineren Bildfeldern (BF4 - BF7) darunter sind die jeweilige Arbeitsbreite (SBI), die Schnitthöhenvorwahl (SHI), die Dreschtrommeldrehzahl, die Gebläsedrehzahl und die Motordrehzahl mit der Motorauslastung veranschaulicht und beziffert.

In den einzelnen Bildfeldern (BF2 - BF7) sind durch verschiedenartige und verschieden angeordnete Anzeigesymbole jeweils die aktuellen Meßwerte (VI, SBI, SHI, S11, S12) und die für den jeweiligen Ort maßgeblichen historischen Betriebsdaten (VS, SBS, SHS, SHS1, SHS2, H31, H32, H6, H7) angezeigt. Somit ist im zweiten Bildfeld (BF2) die Ist-Geschwindigkeit (VI) wie mit einer Tachometernadel dargestellt und außerhalb der Skala die historisch ermittelten Soll-Geschwindigkeit (VS) angegeben.

Weiter sind im dritten Bildfeld (BF3) als Eckenabschnitt die momentanen flächemäßigen Schüttler- und Sieb-Ist-Verluste angezeigt und dazu die historischen Verlustwerte (H31, H32), die auf den Ernteort transformiert sind. Es ist ersichtlich, daß die Verlustraten gegenüber den früher erreichten verbessert worden sind.

Weiter sind im vierten Bildfeld (BF4) die Ist- und Soll-Schnittbreiteneinstellung (SHI, SHS) dargestellt.

Im fünften Bildfeld (BF5) sind wiederum innen bzw. außen von der Skala die Ist-Schnitthöhe (SHI) und die historisch ermittelte Soll-Schnitthöhe (SHS) angezeigt. Hinzu kommen Grenzwertanzeiger (S11, S12) der aktuell vom Fahrer vorgegebenen Schnitthöhengrenzen und die außen hohl dargestellten Grenzwertvorgaben (SHS1, SHS2), die aus den historischen Daten ermittelt worden sind. Da die vorgegebenen Grenzwerte niedriger liegen als die historischen, ist ersichtlich, daß letztere nicht unmittelbar auf den Regler geführt sind sondern nur dem Bediener als Leithilfe dienen und er versucht, eine neue, günstigere Einstellung mit niedrigeren Stoppeln zu finden. Ob eine unmittelbare oder mittelbare Regeldatenvorgabe erfolgen soll, ist durch eine Tastenwahl für die einzelnen Bildfelder vorgebbar. Welche der Grenzwerte jeweils aktiviert oder nur informativ sind, ergibt sich aus der massiven bzw. leeren Darstellung der entsprechenden Symbole. Innerhalb der aktivierten Grenzwerte (S11, S12) arbeitet die interne Regelung der Schnitthöhenoptimierung.

Zu den Darstellungen der Ist- und Soll-Betriebsdaten werden übersteuernd Alarme und wichtige Meldungen in den variabel zuzuordnenden Bildfeldern (BF2 - BF7) dargestellt. Ein Alarmfall tritt u.a. dann ein, wenn ein Soll- oder Grenzdatum vorgegeben ist, der aufgrund des historisch ermittelten Datums als gefahrträchtig zu beurteilen ist, also zu geringe Schnitthöhe oder zu hohe Geschwindigkeit vom Bediener zugelassen worden ist, die zu einem Schaden führen könnte. Eine Alarmsituation würde beispielsweise dann auftreten, wenn im Bildfeld (BFS) des Schnitthöhenanzeigers die Ist-Schnitthöhenanzeige (SHI) den unteren historischen Grenzwert (SHS1) unterschreiten würde.

Alarme sind eine Sonderform von Meldungen höherer Priorität. Sie erzeugen ein optisches und akustisches Signal, das vom Bediener quittiert werden muß. Das optische Signal besteht aus einem Symbol und erklärendem Text und überlagert den bisherigen Bildschirminhalt. Nach einem Quittieren erscheint der Alarm nur noch als Meldung.

In kurzen Zeitabständen werden die Ist-Fahrgeschwindigkeit die Wegsignale und der Ein-Auszustand des Schneidwerkes ermittelt und zur Ortsbestimmung und Adressierung des Katasters sowie zur Anzeige und als Regelgrößen ausgewertet.

Weiterhin werden vom Leitstandprozessor (M1) periodisch mit dem Antrieb- und Fahrwerkmikroprozessor (M3) folgende Nachrichten ausgetauscht und zwar:

### empfangen:

- Teilbreite 1/1 - 1/4
- Arbeitsbreite
- Stat. Radius x Übersetzung
- Obere Leerlastdrehzahl Motor
- Vollastdrehzahl Motor
- Min. Arbeitsdrehzahl
- Zulässiger Schlupf

### gesendet:

- bearbeitete Fläche
- Flächenleistung
- Wegstrecke
- Arbeitsstunden
- Betriebsstunden
- Bordnetzspannung
- Motorauslastung
- Gebläsedrehzahl
- Dreschtrommeldrehzahl.

Letztere Daten dienen insbes. für die Ernte- und Abrechnungsinformationsausgaben sowie für die Erstellung des Erntekatasters zur Korrelation der Getreidedurchsatzdaten, die der Förder- und Reinigungsmikroprozessor (MN) ermittelt und periodisch aussendet und zu laufenden und akkumulierten Ausgaben gespeichert.

Eine laufende Kommunikation mit kurzen Reaktionszeiten findet insbes. auch zwischen dem Leitstandmikroprozessor (M1) und dem Schneidwerkreglerprozessor (M2) statt, da die Signale der Kommandotasten (T15 - T18) am Fahrhebel (F) unverzüglich in Steueraktionen zur Höhen- und Neigungseinstellung des Schneidwerk umgesetzt werden müssen, da diese zur optimalen Erfassung unterschiedlich hohen und/oder geneigten oder liegenden Getreides und zur Verhinderung von Beschädigungen des Schneidwerks durch Steine oder Erdhaufen und zur Verhinderung von einer Überlastung des Förderers zur jeweils vorgegebenen Fahrgeschwindigkeit und Schnittbreite stehen, die durch die Längs- bzw. Querneigungseinstellung am Fahrhebel (F) bestimmt werden.

Zur Kommunikation des Schneidwerkprozessors (M2) sind insbes. folgende periodische Nachrichten vorgesehen:

### Empfang:

- Geschwindigkeit
- Inkrementieren oder dekrementieren der Schnitthöhe,
- Sollwerte für die beiden Absenkautomaten
- Sollwert für den Schnitthöhenregler

### Sendung:

- Istwerte der Absenkautomaten
- Istwerte der rechten und linken Bodentaster
- Kontourautomatik ein - aus
- Stellgrößen der Absenkautomaten ein - aus
- Stellgrößen der Schnitthöhenregler ein - aus.

Außerdem werden mit Priorität Alarme gesendet, die die Überschreitung von vorgegebenen Istwert-Grenzwerten sowie Störungen an den Stellgliedern und den Magnetventilen der hydraulischen Höhen- und Neigungsverstellvorrichtungen signalisieren.

Die Istwerte für die Schnitthöhen- und Neigungseinstellung sind gebildet aus dem Auflagedruck (gemessen an der Schneidwerkfeder) und dem Bodenabstand (gemessen über Tastbügel). Damit hat der Fahrer die Möglichkeit, den Auflagedruck und den Bodenabstand des Schneidwerks stufenlos optimal einzustellen.

Damit das Schneidwerk parallel zum Boden geführt wird und die Schnitthöhe über die gesamte Schneidwerkbreite konstant ist, ist neben der Höhenreglung noch eine Querreglung aktiv. Diese Querreglung vergleicht den linken und rechten Bodenabstand und gibt bei Abweichungen Korrektursignale an die Neigungshydraulik.

Mit der Absenkautomatik hat der Fahrer die Möglichkeit, eine Schneidwerkhöhe von z. B. über 100 mm vorzuwählen. Die vorgewählte Höhe wird automatisch eingestellt. Der Fahrer kann während der Fahrt zwischen einem Absenkautomatikprogramm und einem Schnitthöhenreglerprogramm umschalten und so auf Tastendruck verschiedene Schneidwerkhöhen anfahren. Diese Funktionsumschaltungen werden hauptsächlich über die Taster am Multifunktionsgriff (F) des Fahrhebels gesteuert. Der obere Taster (T17) dient zum Ausheben des Schneidwerks aus dem bodennahen Kontur-Automatikstellbereich heraus in einen bodenferneren Schnitthöhenbereich. Der untere Taster (T18) dient zum Absenken des Schneidwerks in die Kontur-Automatikstellung, die entweder im Bereich einer vorgegebenen Schnitthöhenvorwahl als auch einer vorgegebenen Schnitthöhenregelung liegen kann. Dies entscheidet sich erst bei der Übernahme eines jeweils zugehörigen Sollwertes, der vom Bediener selbst festgelegt wird oder aus den katasterisierten Daten ermittelt laufend vorgegeben wird.

Es sind zwei Arten von Sollwert-Eingaben vorgesehen. Bei der ersten Methode kann der Sollwert durch die +/- Tasten (T12) der Tastatur (TA) verändert werden. Diese Sollwertänderung ist im Arbeitsmenü einstellbar. Das System unterstützt die Eingabe dadurch, daß der Cursor jeweils entsprechend der Automatik steht, die mit der Taste am Multifunktionsgriff (F) vom Fahrer vorgewählt wurde. Der Sollwert wird inkremental um kleine Schrittweiten (2,5%) verstellt. Die Ausführzeit liegt unter einer Sekunde. Das Terminal sendet dazu die Nachricht "Increment" oder "Decrement" an den Schneidwerkmikroprozessor (M2), welcher wiederum mit dem neuen Sollwert antwortet. So wird die Berechnung des neuen Sollwertes zentral an einer Stelle durchgeführt. Eine Voreinstellung der Sollwerte (S11, S12), Fig. 2, ist außerdem in einem Untermenü: Einstellen Kontur, möglich.

Die zweite Methode ermöglicht dem Fahrer, den aktuellen Istwert als neuen Sollwert zu übernehmen. Dazu wird das Schneidwerk über die Tasten (T15, T16) für Heben und Senken in die gewünschte Position gebracht und dann durch langes Drücken (über 3 Sekunden) der entsprechenden Automatiktaste (T17, T18) der Istwert als neuer Sollwert übernommen. Eine kurze Betätigung des Schalters senkt hingegen das Schneidwerk in die durch den anderen Sollwert bestimmte Automatikstellung, und der eingestellte Sollwert wird dabei nicht verändert. Die Entscheidung, ob mit dem alten Sollwert anschließend weitergefahren werden soll oder der Istwert als neuer Sollwert übernommen werden soll, wird jeweils erst nach dem Loslassen des Schalters gefällt.

Die neu von Hand vorgegebenen Soll- und Grenzbetriebswerte werden jeweils für die Nutzung beim Durchfahren der benachbarten Schneise katasterisiert. So kann in wenigen Umläufen eine optimale Einstellung gefunden werden und für die nächsten Umläufe übernommen werden.

So wie für die Schneidwerkregelung Standardeinstellwerte, d.h. Soll- und Grenzwerte, vorgegeben sind, von denen aus der Bediener eine Änderung bei von der Norm abweichenden äußeren Betreibsbedingungen vorgeben kann, so ist dies auch für die anderen Teilaggregate des Mähdreschers der Fall. Für die Ertragsmessung und Verlustmessung und die zugehörigen Berechnungen sind für die einzelnen Getreidearten jeweils Standardwerte der Litergewichte bei einer Durchschnittsqualität und Durchschnittsfeuchtigkeit eingespeichert, weshalb nach dem Einschalten menügeführt die jeweilige Getreideart auszuwählen ist. Es können darüberhinaus in Zeitabständen extern ermittelte Litergewichtsangaben eingegeben werden, falls keine Wägeautomatik vorhanden ist. Die Angaben werden in den Ertrag- und Verlustmeßmikroprozessor (MN) übertragen und zur Auswertung der Meßdaten dort verwendet, worauf die Ergebnisse laufend an den Leitstandmikroprozessor (M1) übertragen werden und dort zur laufenden Ausgebe in dem Erntebild in die Piktogramme des Bildfeldes (BF3) eingetragen werden und zur Auswertung und späteren Ausgabe auf einem Drucker oder einer Kassette (C) zwischengespeichert werden. Auch die Körnerverlustmeßvorrichtung benötigt zur Korrelation der gemessenen Signale die Angabe der Getreideart, der jeweils charakteristische Werte zugeordnet gespeichert gehalten sind.

Tritt ein Verlustwert auf, der trotz der regelungsbedingten Optimierungen einen vorgegebenen Grenzwert überschreitet, wird eine Alarmmeldung gegeben. Durch die unübersehbare, sehr anschauliche Darstellungen der Schüttlerverluste im linken Dreieck und der Siebverluste im rechten Dreieck des Bildfeldes (BF3) der Erntebildmaske, Fig. 2, hat der Bediener ständig diese wichtigen Bedienkriterien im Blickfeld, so daß er eine weitere Optimierung durch jeweils geeignete Schnittbreitenwahl, Fahrgeschwindigkeitseinstellung, Schnitthöheneinstellung und evtl. Sieb- und Gebläseverstellungen laufend vornehmen kann.

Die ergonomische Anordnung des Fahrhebels (F) im Griffbereich der rechten Hand und die der Tastatur (TA) vor der rechten Hand erlaubt auch im laufenden Betrieb einen leichten Zugriff auf die gespeicherten Informationen und die Neuvorgabe von Soll-Betriebswerten.

Die Verarbeitung der eingehenden Nachrichten im Leitstandprozessor (M1) in die einzelnen Bildfelder geschieht in zwei verschiedenen Programmebenen. Eine einlaufende Nachricht wird zuerst in einer interruptgesteuerten Hintergrundprogrammebene wie folgt behandelt.
- Liegt identifikatorgemäß ein Alarm vor, wird die zugehörige Nachricht aus dem Puffer übernommen und ein Alarmmerker gesetzt und die Nachrichtenzuordnung zu dem zugehörigen Alarmbildfeld (BF3) getroffen und in einem Bildfeldkontrollspeicher vermerkt, die Hupe eingeschaltet sowie der Identifikator gelöscht.
- Liegt kein Alarm sondern eine Meldung vor, so wird die der Nachricht entsprechende Meldung in einem Kontrollfeld des Meldungsbildfeldbereichs (BF4) vorgemerkt und ein Kurzhupen initialisiert sowie der Identifikator gelöscht.
- Liegt weder ein Alarm noch eine Meldung vor und ist ein neuer Anzeigewert übergeben worden, so wird die Anzeigevariable in den dem jeweiligen Anzeigewert zugehörige Bildfeldkontrollspeicher eingetragen sowie der Identifikator gelöscht.

Die Weiterverarbeitung der Bildfeldkontrollspeicherinformationen erfolgt periodisch in einem Hintergrunddienstprogramm. In diesem werden die einzelnen Bildbereichinhalte abhängig von den Statusinformationen in den Bildfeldkontrollspeichern in einem Bildspeicher zusammengestellt und/oder aktualisiert.
- Liegt ein Wechsel zum Status Dreschwerk-ein vor, wird das Erntebild, Fig. 2, aufbereitet; liegt der neue Status Dreschwerk-aus vor, so wird eine Fahrbildmaske aufgebaut.
- Ist ein Zustand der Bedientasten (T11 - T18) geändert, so wird dementsprechend der Menüstatusspeicher aktualisiert, und die zugehörigen Bildfeldstatusspeicher werden mit entsprechende Eintragungen versehen bzw. gelöscht.
- Ist ein Alarm durch eine Tastenbetätigung bestätigt worden, so wird der Alarmstatus des Alarmbildfeldes (BF3) im zugehörigen Bildfeldstatusbereich gelöscht und die Hupe ausgeschaltet.
- Danach werden die in den einzelnen Bildfeldstatusspeichern enthaltenen neuen Eintragungen hierarchisch übersteuernd bezogen auf Alarmeintragungen, Meldungseintragungen und allgemeine Betriebsinformationen, wie neue Ist- und Sollwerte und Menüstatusänderungen, zur Steuerung der Änderung der Bildspeicherinhalte ausgewertet, so daß der Bildinhalt vollständig aktualisiert ist.

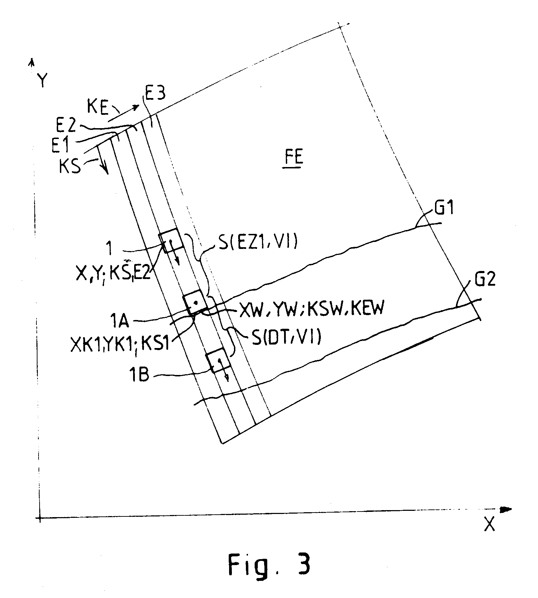

Figur 3 zeigt eine Feldkarte in einem absoluten Ortskoordinatennetz (X, Y). Das Feld (FE) wird in Bahnen oder Schneisen (E1, E2, E3), die sich in der relativen Koordinatenrichtung (KE) nebeneinander erstrecken und in der Wegkoordinatenrichtung (KS) gerichtet verlaufen, bearbeitet. Werden die Schneisen in wechselnder Richtung durchlaufen, so werden die Koordinaten entsprechend ausgewertet. Wenn beispielsweise der Mähdrescher in der historischen Position (1B) war, als Meßdaten an seinem Ausgang gewonnen wurden, so war er um die Strecke S(DT, VI), die in der Maschinen-Durchlaufzeit (DT) bei der Ist-Geschwindigkeit (VI) durchfahren hat auf der Position (1A) mit den wahren Koordinaten (XW, YW; KSW, KEW), unter denen die Meßdaten (Betriebsdaten) abgespeichert werden.

Bei einem späteren Erntevorgang wird dann, wenn sich der Mähdrescher in der aktuellen Position (1) mit den laufenden Koordinaten (X, Y; KS, E2) befindet auf diese gespeicherten Betriebsdaten vorgegriffen, die dann relevant sind für die Maschineneinstellung, wenn der Mähdrescher in die Zielposition (1A), mit den Koordinaten (XK1, YK1; KS1) eintrifft. Diese Zielposition (1A) liegt um die Strecke S(EZ1, VI) der aktuellen Position (1) voraus, die in der Maschineneinstellzeitkonstanten (EZ1) und der Geschwindigkeit (VI) des Mähdreschers durchfahren wird.

Befinden sich auf dem Feld (FE) Fertilitätsgsrenzen (G1, G2), in denen jeweils für einen optimalen oder sicheren Betrieb mindestens eine größere Umstellung der Maschinensollwerte vorgenommen werden muß, so werden die entsprechenden Vorgaben so rechtzeitig wirksam gemacht, daß die Umstellung beim Erreichen der Fertilitätsgsrenzen (G1, G2) jeweils gerade abgeschlossen sind.

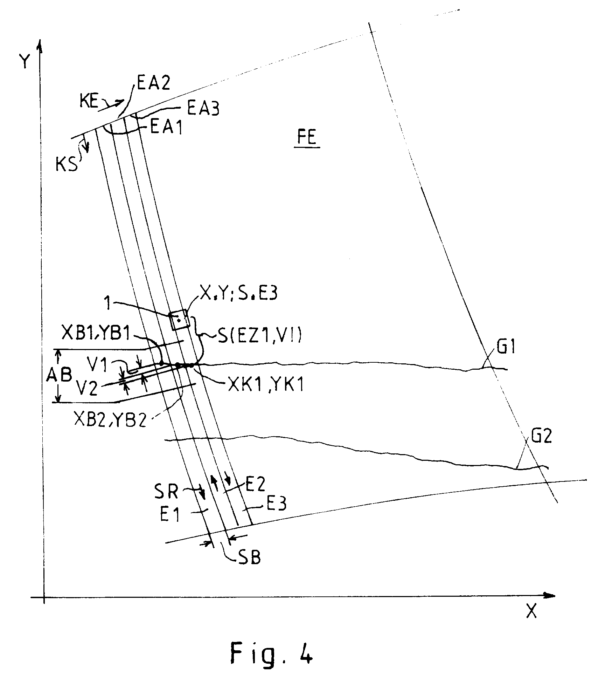

Figur 4 zeigt eine weitere Feldkarte (FE) in den absoluten Koordinaten (X, Y) und mit den relativen Koordinaten (KE, KS). Die Ernteschneisen (E1, E2, E3) mit der Schneisenbreite (SB) werden jeweils auf benachbarte Anfangspunkte (EA1 - EA3) bezogen kartiert.

An die Fertilitätsgrenze (G1) sind unter dem Koordinatenpaar (XB1, YB1) in der erste Ernteschneise (E1) Betriebsdatensprünge abgespeichert ebenso wie in der zweiten Ernteschneise (E2) unter den Koordinaten (XB2, YB2). Befindest sich der Mähdrescher in der aktuellen Position (1) unter den Koordinaten (X, Y, E3, S) in der dritten Ernteschneise (E3), so werden die gespeicherten Betriebsdaten in einem vorausliegenden Analysebereich (AB) auf Betriebsdatensprünge oder starke Betriebsdatenänderungen untersucht und die vorgenannten Koordinatenpaare (XB1, YB1; XB2, YB2) gefunden und daraus deren Versatz (V1) in der Fahrtrichtung (SR) ermittelt und ein entsprechender Versatz (V2) in die benachbarte Ernteschneise (E3) extrapoliert und dort der Verlauf der Fertilitätsgrenze (G1) postuliert. Hat sich der Mähdrescher diesem Grenzwert bis auf die Strecke S(EZ1, VI) genähert, die in der Maschineneinstellzeitkonstanten (EZ1) mit der Fahrgeschwindigkeit (VI) zu durchfahren ist, so findet die Soll- oder Grenzbetriebsdatenvorgabe nach den historischen Betriebswerten, die hinter der Fertilitätsgrenze (G1) zutreffen, bereites dort und nicht erst beim Erreichen der Fertilitätsgrenze (G1) statt, wenn die neue Einstellung hinter der Fertilitätsgrenze (G1) eine erhöhte Sicherheit gegen Überlastung und/oder Maschinenschaden bringt. Somit fallen die Zielkoordinaten (XK1, YK1) für die Beendigung der Umstellung in den angenommenen Grenzübergangspunkt. Ist die größere Gefahr eine Überlastung in dem Erntebereich der verlassen wird, so wird die Umstellung erst beim Erreichen der Fertilitätsgrenze eingeleitet.

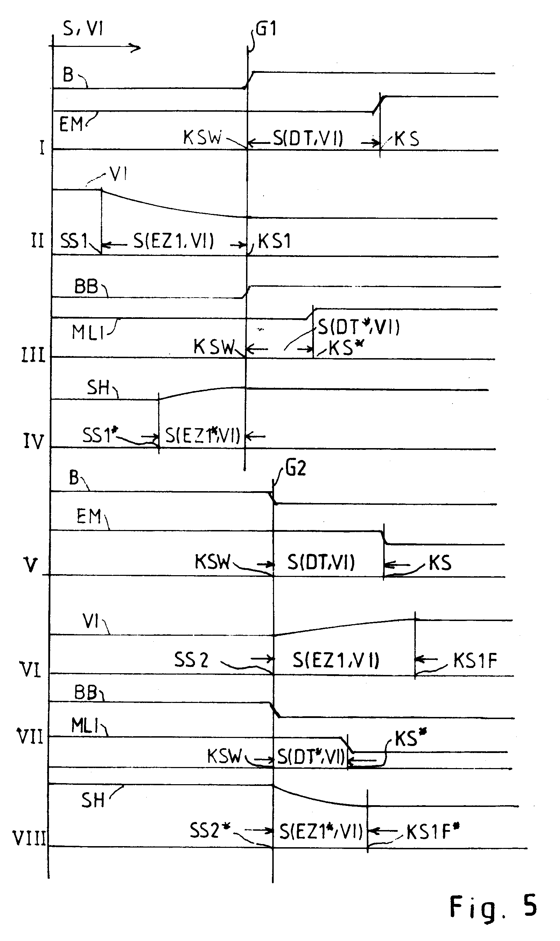

Figur 5 verdeutlicht über den Fahrweg (S) die Zusammenhänge zwischen den unterschiedlichen Maschinenstandorten und den Abhängigkeiten von den zeitrelevanten Größen. Im Abschnitt I sind die Größen eines Getreidebestandes (B) im Streckenverlauf einer Schneise über eine Fertilitätsgrenz (G1) hinaus veranschaulicht, sowie ein von einem Mähdrescher daraus gewonnenes Ertragsmeßsignal (EM). Der Ort mit der Streckenkoordinate (KS), an dem der Meßsignalsprung infolge des Fertilitätssprunges auftritt, liegt um die Strecke S(DT, VI), die sich aus der Durchlaufzeitkonstanten (DT) der Körner durch den Mähdrescher und aus der Ist-Fahrgeschwindigkeit (VI) ergibt, hinter der Lage der Fertilitätsgrenze (GI), welche die wahren Koordinaten (KSW) hat. Die Speicherung des Meßwertes wird deshalb auf die wahre Koordinate (KSW) bezogen vorgenommen.

Im Abschnitt II ist die Auswertung des unter der wahren Koordinate (KSW) abgespeicherten Ertragsmengesprunges veranschaulicht und zwar in Bezug auf eine Regelung der Geschwindigkeit des Mähdreschers, die laufend als Ist-Geschwindigkeit (VI) signalisiert wird und dargestellt ist. Damit die Ist-Geschwindigkeit (VI) beim Eintreffen des Mähdreschers an der Fertilitätsgrenze (GI) bereits soweit abgesunken ist, daß das höhere Getreideaufkommen den Mähdrescher nicht verstopft, ist die Geschwindigkeitsänderung bereits an einer vorverlegten Koordinate (SS1) eingeleitet, welche um eine Strecke S(EZ1, VI) vor den Zielort (KS1) an der Fertilitätsgrenze vorverlegt ist, die sich aus der Einstellzeitkonstante (EZ1) der zu verändernden Geschwindigkeit und der tatsächlichen Durchfahrgeschwindigkeit (VI) ergibt. Hierbei ist zu berücksichtigen, daß die Geschwindigkeit selbst während der Umstellung sich verändert und somit sich der Weg als ein Integral ergibt.

Im Abschnitt III ist wiederum ein Bestandsverlauf (BB) über die Fertilitätsgsrenze (G1) gezeigt und dazu die Ist-Maschinenlast (MLI), welche mit einer gewissen Durchlaufverzögerung, insbes. an der eingangsseitigen Förderstrecke, auftritt. Diese Verzögerung (DT*) ergibt in Verbindung mit der Fahrgeschwindigkeit (VI) den Wegversatz bis zu dem Meßort mit den Koordinaten (KS*). Um diesen Versatz wird wiederum der Lastsprung auf die wahren Koordinaten (KSW) bezogen gespeichert.

Im Abschnitt IV ist die Einstellung der Schnitthöhe (SH) gezeigt, die sich ergibt, wenn an einem vorverlegten Koordinatenort (SS1*) die Schnitthöheneinstellung eingeleitet wird, so daß diese nach einer Einstellzeitkonstanten (EZ1*) bei der Fahrgeschwindigkeit (VI) dann abgeschlossen ist, wenn die Fertilitätsgrenze zu dem dichten Bestand erreicht ist.

Die Zeitkonstanten sind deshalb vor der Fertilitätsgrenze berücksichtigt, weil in dem ihr nachfolgend durchfahrenen dichteren Bestand, bereits mit der neuen Maschineneinstellung durchgeführt werden soll, um eine erhöhte Sicherheit gegen eine Überlastung oder eine Beschädigung des Mähwerkes zu haben. In den unteren Bildabschnitten V bis VIII wird eine Fertilitätsgrenze (G2) durchfahren, bei der ein starkes Absinken des Ertrages (EM) und ein Absinken der Last (MLI) auftritt. Auch hier ist bis zum Eintreffen der Meßsignale (EM, MLI) jeweils eine Durchlaufzeit (DT, DT*) des Getreides und der Körner sowie der dabei durchfahrene Weg S(DT,VI), S(DT*,VI) zu berücksichtigen, um die gemessenen Daten zu den wahren Ortskoordinaten (KSW) abzuspeichern.

Bei der späteren Nutzung dieser Daten wird die entsprechende Sollwertumstellung jeweils am Ort der Fertilitätsgrenze (SS2, SS2*) vorgenommen, damit in dem dichten Bestand noch keine Geschwindigkeitserhöhung und keine Schnitthöhenerniedrigung erfolgt, wodurch eine Überlastung oder Mähwerkbeschädigung vermieden wird. Die Umstellung der Geschwindigkeit (VI) und der Schnitthöhe (SH) geschieht wiederum mit den zugehörigen Zeitkonstanten (EZ1, EZ1*), was jedoch unkritisch ist, da der Betrieb in dem schwächeren Bestand gefahrlos ist.

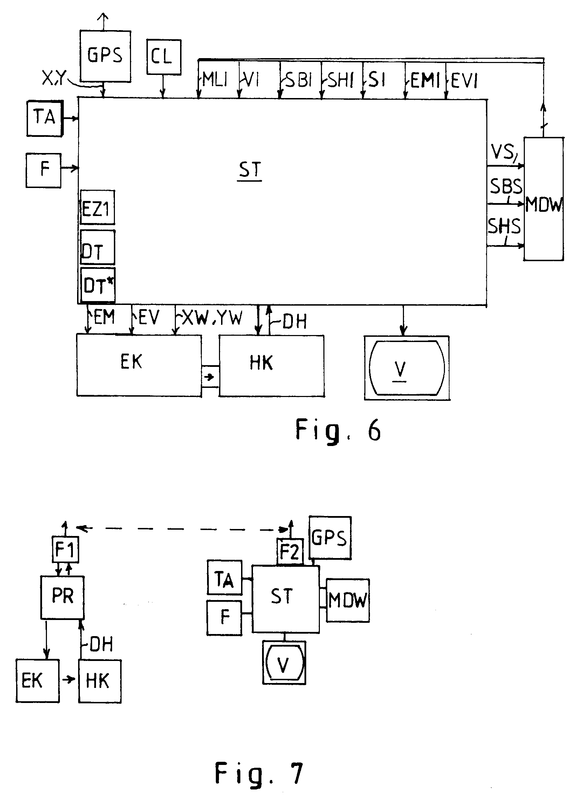

Figur 6 zeigt ein Blockschaltbild der Steuervorrichtung (ST). Diese wird von einer Ortungsvorrichtung (GPS) mit Koordinaten (X, Y) und von einer Uhr (CL) mit Zeitinformation gespeist. Die Steuervorrichtung (ST) speist mit Soll-Betriebssignalen (VS, SBS, SHS) das Mähdrescherwerk (MDW), welches seinerseits Ist-Signale (MLI, VI, SBI, SHI, SI, EMI, EVI) von dieser erhält. Außerdem liefert der Bediener über die Tastatur (TA) und den Fahrhebel (F) Betriebssteuersignale an die Steuervorrichtung (ST). In dieser sind zahlreiche Betriebsparameter gespeichert, insbes. auch die Einstellzeitkonstanten (EZ1, EZ1*) und die Durchlaufzeiten (DT, DT*). Die Steuervorrichtung ermittelt aus diesen Daten zu den wahren Koordinaten (XW, YW) Betriebsdaten (EM, EV) insbes. spezifische Ertragsmeßdaten und Verlustdaten, welche in dem Erntekataster (EK) den wahren Koordinaten zugeordnet jeweils abgespeichert werden. Bei einer Wiederverwendung dieser Daten befinden sich diese in dem historischen Datenkataster (HK) und werden dort mit Suchkoordinaten adressiert als historische Daten (DH) in die Steuervorrichtung zur Weiterverarbeitung übergeben. Gemäß dem vorher beschriebenen werden daraus Soll-Betriebsdaten für einen optimalen Betrieb ermittelt und entweder unmittelbar dem Mähdreschwerk (MDW) zugeführt oder auf einem Bildgerät (V) visualisiert dem Bediener gezeigt.

Figur 7 zeigt eine abgewandelte Vorrichtung, bei der Teilfunktionen in einem separaten, insbesondere stationären, Prozessor (PR) ausgeführt werden, der den Katasterspeicher (EK) so wie das historische Kataster (HK) bedient und die historischen Daten (DH) über eine Funkstrecke (F1, F2) der Steuervorrichtung (ST) des Mähdreschers übermittelt. Dieser wiederum übermittelt die aktuellen Betriebsdaten sowie die von der Ortungsvorrichtung (GPS) ermittelten Koordinatendaten über die Funkstrecke (F1, F2) an den Prozessor (PR). Dieses System hat den Vorteil, daß mit einer Katasterstation mehrere Mähdrescher über Funk zusammenarbeiten können und somit auch mehrere Mähdrescher unmittelbar jeweils mit den Daten eines vorausfahrenden Mähdreschers, der eine benachbarte Schneise aberntet, arbeiten kann. Selbstverständlich kann die die Katasterspeicher beherbergende Vorrichtung auch auf einem der Mähdrescher selbst angeordnet sein und von dort aus mit weiteren Mähdreschern per Funk kommunizieren.

## Patentansprüche

1. Verfahren zum Betrieb eines Mähdreschers, der laufend zur Ernteleistungsoptimierung durch einen Steuerprozessor (ST) mit Soll- und/oder Grenzbetriebsdaten von einem Bediener extern gesteuert sowie intern bei laufender Messung und Auswertung von Ist-Betriebsdaten (VI, SBI, SHI), insbes. Fahrdaten, geregelt betrieben wird, wobei laufend die absoluten und/oder relativen Ortskoordinaten (X, Y) des Mähdreschers erfaßt und diesen zugeordnet die jeweiligen flächenspezifischen Ertragsmeßdaten (EM), insbesondere als ein Ertragsdatenkataster (EK), zur Verwendung als historisches Datenkataster (HK) gespeichert werden und der Steuerprozessor (ST) des Mähdreschers das historische Datenkataster (HK) im Zugriff hat und mit den jeweiligen Ortskoordinaten (X, Y) des Mähdreschers, verknüpft mit dessen jeweiligen Fahrdaten (VI, SBI, SHI), dort gespeicherte historische Daten (DH) adressiert und liest und daraus neue Soll- oder Grenzbetriebsdaten (VS, SBS, SHS) bestimmt und aktuell vorgibt, dadurch gekennzeichnet, daß der Steuerprozessor 8ST) die im historischen Datenkataster (HK) gespeicherten Daten jeweils den aktuellen Ortskoordinaten vorgreifend adressiert und liest.

2. Verfahren nach Anspruch 1, dadurch gekennzeichnet, daß als die Ist-Betriebsdaten eine Ist-Fahrgeschwindigkeit (VI), eine Ist-Schnittbreite (SBI), und eine Ist-Ertragsmenge (EMI) laufend gemessen werden und daraus jeweils die flächen-spezifischen Ertragsmeßdaten (EM) bezüglich der aus den laufenden Koordinaten (X, Y; KS, KE) und der Ist-Fahrgeschwindigkeit (VI) in Verbindung mit einer Erntegutdurchlaufzeit (DT) durch den Mähdrescher bestimmten rückliegende Koordinaten (XW, YW; KSW, KEW) des jeweils wahren Ernteortes katasterisiert werden und daß aus dem historischen Datenkataster (HK) später am gleichen Ort mit den Koordinaten (XW, YW; KSW, KEW) jeweils die historischen Daten (DH) bezüglich künftiger Koordinaten (XK1, YK1; KS1) des Mähdreschers, die dieser durch die jeweilige Fahrgeschwindigkeit nach einer Einstellzeitkonstanten (EZ1) eines jeweiligen zugehörigen Maschinenlastregelvorganges erreicht haben wird, gelesen und die Soll-Geschwindigkeit (VS) und/oder die Soll-Schnittbreite (SBS) und/oder die Soll-Schnitthöhe (SHS) daraus so bestimmt werden, daß eine möglichst gleiche Maschinenlast beim Überfahren der künftigen Koordinaten (XK1, YK1; KS1) auftritt und eine Überlast oder Maschinengefährdung vermieden wird.

3. Verfahren nach Anspruch 1 oder 2, dadurch gekennzeichnet, daß laufende Ernteverluste (EVI) gemessen und flächenspezifisch bezüglich der wahren Koordinaten (XW, YW; KSW, KEW) katasterisiert werden und bei einem späteren Mähen am gleichen Ort (XW, YW) daraus bezüglich er künftigen Koordinaten (XK1, YK1; KS1, KE1) die Soll-Geschwindigkeit (VS) und/oder die Soll-Schnittbreite (SBS) und/oder die Soll-Schnitthöhe (SHS) so bestimmt werden, daß ein möglichst geringer flächenspezifischer Ernteverlust nach dem Überfahren der künftigen Koordinaten (XK1, YK1; KS1, KE1) auftritt.

4. Verfahren nach einem der vorstehenden Ansprüche, dadurch gekennzeichnet, daß als Ist-Betriebsdaten eine gemessene Ist-Maschinenlast (MLI) bezüglich der aus dem laufenden Koordinaten (X, Y; KS, KE) und der Ist-Fahrgeschwindigkeit (VI) in Verbindung mit einer Ernteguteinlaufzeit (ET) bis zur Lastmessung bestimmten wahren Koordinaten (XW, YW; KSW, KEW) flächenspezifisch katasterisiert werden und daraus später am gleichen Ort mit den Koordinaten (XW, YW; KSW, KEW) jeweils die historischen Daten (DH) bezüglich künftiger Koordinaten (XK1, YK1) des Mähdreschers, die dieser durch die jeweilige Fahrgeschwindigkeit (VI) nach einer Einstellzeitkonstanten (EZ1) eines jeweiligen Maschinenlastregelvorganges erreicht haben wird, gelesen und die Soll-Geschwindigkeit (VS) und/oder die Soll-Schnittbreite (SBS) und/oder die Soll-Schnitthöhe (SHS) daraus so bestimmt werden, daß eine möglichst gleiche Maschinenlast beim Überfahren der künftigen Koordinaten (XK1, YK1; KS1, KE1) auftritt.

5. Verfahren nach einem der vorstehenden Ansprüche, dadurch gekennzeichnet, daß die katasterisierten historischen Daten (DH) mit jahresspezifischen Daten des jeweiligen Erntegutes oder der jeweiligen Witterungseinflüsse verknüpft werden, insbes. mit vorgegebenen Anfangs-Soll- Betriebswerten, vor ihrer Auswertung modifiziert werden.

6. Verfahren nach einem der vorstehenden Ansprüche, dadurch gekennzeichnet, daß die katasterisierten Daten (DH) einer oder mehrerer Ernteschneisen (E1, E2), die der laufend zu erntenden Ernteschneise (E3) benachbart sind, durch eine Koordinatenextrapolation der laufenden Wegkoordinaten (KS; X, Y) des Mähdreschers auf der benachbarte(n) Koordinaten (K3S, E3; XB1, YB1; XB2, YB2) und zur Bestimmung der Soll- oder Grenzbetriebsdaten (VS, SBS, SHS) ausgewertet oder unmittelbar als solche genutzt werden.

7. Verfahren nach Anspruch 6, dadurch gekennzeichnet, daß die katasterisierten Daten (DH) der jeweils benachbarten Ernteschneisen (E1, E2) bezüglich der laufenden Koordinaten (KS, E3; X, Y) des Mähdreschers jeweils einem voraus- und zurückliegenden Bereich auf, gegen oder in Richtung (SR) der Schneisen (E1, E2) auftretende Versetzungen (V1, V2) von jeweils einander ähnlichen Änderungen der Daten (DH) entsprechend den Versetzungen (V1, V2) auf die laufenden Koordinaten (KS, E3; X, Y) extrapoliert zur Bestimmung der Soll- oder Grenzbetriebsdaten (VS, SBS, SHS) ausgewertet oder unmittelbar genutzt werden.

8. Verfahren nach einem der vorstehenden Ansprüche, dadurch gekennzeichnet, daß die aus den katasterisierten Daten (DH) ermittelten Soll- oder Grenzbetriebsdaten (VS, SBS, SHS) jeweils einem Sollwerteingang eines zugehörigen Reglers unmittelbar zugeführt oder auf einem Leitstand-Bildschirmgerät (V) oder Anzeigegerät visualisiert werden.

9. Verfahren nach Anspruch 8, dadurch gekennzeichnet, daß die Soll- oder Grenzbetriebsdaten (VS, SBS, SHS) jeweils spezifisch ausgebildet neben dem jeweiligen zugehörigen Ist-Betriebswerten (VI, SHI, SBI) und jeweils vom Bediener vorgegebenen Soll- und Grenzwerten (S11, S12) auf dem Leitstand-Bildschirmgerät (V) dargestellt sind.

10. Verfahren nach einem der vorstehenden Ansprüche, dadurch gekennzeichnet, daß die relativen Ortskoordinaten als richtungsorientierte Wegkoordinaten (KE, KS) bezüglich korrespondierender Schneisenanfangsorte (EA1, EA2, EA3) in den einzelnen Ernteschneisen (E1, E2, E3) durch eine laufende Wegmessung aus Ist-Wegmeßdaten (WI) ermittelt werden.

11. Verfahren nach einem der vorstehenden Ansprüche, dadurch gekennzeichnet, daß die absoluten Ortskoordinaten (X, Y) des Mähdreschers mittels einer Funkortungsvorrichtung (GPS, DGPS) und laufender Wegmessung bestimmt werden und eine Transformation in fahrtrichtungsorientierte Wegkoordinaten (KS, KE) und umgekehrt vorgenommen wird, wenn Katasterdaten gelesen bzw. eingespeichert werden.

12. Verfahren nach einem der vorstehenden Ansprüche, dadurch gekennzeichnet, daß die zu katasterisierenden Daten alle laufend darauf überwacht werden, ob mindestens ein Datum der zuletzt gespeicherten zugehörigen Daten um einen vorgegebenen relativen oder absoluten Betrag über- oder unterschreitet, worauf die jeweiligen Daten mit ihren wahren Koordinaten (KEW, KSW; XW, YW) abgespeichert werden.

13. Verfahren nach einem der vorstehenden Ansprüche, dadurch gekennzeichnet, daß die aus den katasterisierten Daten (DH) ermittelten Soll-Betriebswerte (VS, SBS, SHS) jeweils nach Art einer übergeordneten Regelschleife den Betriebsreglern des Mähdreschers zugeführt werden, die ihrerseits untergeordnet regelnd arbeiten.

14. Verfahren nach einem der vorstehenden Ansprüche, dadurch gekennzeichnet, daß die Ortsbestimmung und/oder die Katasterdatenverarbeitung und/oder -bereitstellung mit einem ortsfesten Prozessor (PR) und einem mähdrescherseitigen Ortungsgerät (GPS) vorgenommen wird und die jeweiligen Ortskoordinaten (X, Y) von diesem per Funk an den stationären Prozessor (PR) und die jeweils ermittelten historischen Daten (DH) laufend per Funk an den Mähdrescher übertragen werden.

15. Vorrichtung zur Durchführund des Verfahrens nach Anspruch 1 1, dadurch gekennzeichnet, daß der Mähdrescher Ortsbestimmungsmitttel (GPS) und Fahrgeschwindigkeitsmeßmittel enthält und dessen gespeicherten Betriebsdaten (DH), durch einen Steuerprozessor (ST), der ein verfahrensgemäßes Programm enthält und der in einem Datenkataster gespeicherte historische Daten (HD), jeweils den aktuellen Ortskoordinaten vorgreifend, adressiert und liest und zu Soll- und/oder Grenzbetriebsdaten (VS, SBS, SHS) verarbeitet, die Betriebsreglern zugeführt werden und/oder auf einem Bildschirmgerät (V) visualisiert werden.

16. Vorrichtung nach Anspruch 15, dadurch gekennzeichnet, daß auf dem Mähdrescher ein Funkgerät (F2) installiert ist, das mit einem weiteren Funkgerät (F1) eines stationären Prozessors (PR), in dem sich das historische Datenkataster befindet, die historischen Daten (HD) oder die daraus ermittelten Soll- und/oder Grenzbetriebsdaten (VS, SBS, SHS) abrufend kommuniziert.

## Claims

1. A method of operating a combine harvester which in a continuous procedure for optimising harvesting capability is operated in an externally controlled mode by a control processor (ST) with reference and/or limit operational data by an operator and in an internally regulated mode with continual measurement and evaluation of actual operational data (VI, SBI, SHI), in particular travel data, wherein in a continuous procedure the absolute and/or relative locational co-ordinates (X, Y) of the combine harvester are detected and in association therewith the respective area-specific yield measurement data (EM) are stored in particular as a yield data cadaster (EK) for use as a historical data cadaster (HK) and the control processor (ST) of the combine harvester has access to the historical data cadaster (HK) and with the respective locational coordinates (X, Y) of the combine harvester, linked with its respective travel data (VI, SBI, SHI), addresses and reads historical data (DH) stored there and determines therefrom new reference or limit operational data (VS, SBS, SHS) and currently presets same, characterised in that the control processor (ST) addresses and reads the data stored in the historical data cadaster (HK), in anticipatory relationship in each case with the current locational co-ordinates.

2. A method according to claim 1 characterised in that an actual travel speed (VI), an actual cutting width (SBI) and an actual yield amount (EMI) are continuously measured as the actual operational data and therefrom there are respectively cadasterised the area-specific yield moment data (EM) in respect of the rearward co-ordinates (XW, YW; KSW, KEW) of the respectively true harvesting location, such co-ordinates being determined from the present co-ordinates (X, Y; KS, KE) and the actual travel speed (VI) in conjuntion with a crop material transit time (DT) through the combine harvester, and that later at the same location with the co-ordinates (XW, YW; KSW, KEW) there are respectively read out of the historical data cadaster (HK) the historical data (DH) in respect of Future co-oridinates (XK1, YK1; KS1) of the combine harvester, which the latter will have reached due to the respective travel speed in accordance with a setting time constant (EZW) of a respective associated machine load regulating procedure, and the reference speed (VS) and/or the reference cutting width (SBS) and/or the reference cutting height (SHS) are so determined therefrom that a machine load which is as equal as possible occurs when travelling over the future co-ordinates (XK1, YK1; KS1) and an overload or jeopardising of the machine is avoided.

3. A method according to claim 1 or claim 2 characterised in that present crop losses (EVI) are measured and cadasterised in area-specific manner with respect to the true co-ordinates (XW, YW; KSW, KEW) and in a later cutting operation at the same location (XW, YW) there are determined therefrom in respect of the future coordinates (XK1, YK1; KS1, KE1) the reference speed (VS) and/or the reference cutting width (SBS) and/or the reference cutting height (SHS) such that an area-specific crop loss which is as low as possible occurs after travelling over the future co-ordinates (XK1, YK1; KS1, KE1).

4. A method according to one of the preceding claims characterised in that a measured actual machine load (MLI) in respect of the true co-ordinates (XW, YW; KSW, KEW) which are determined from the present coordinates (X, Y; KS, KE) and the actual travel speed (VI) in conjunction with a crop material intake time (ET) up to load measurement are cadasterised in areas-specific manner as actual operational data and later at the same location with the co-ordinates (XW, YW; KSW, KEW) there are respectively read therefrom the historical data (DH) in respect of future co-ordinates (XK1, YK1) of the combine harvester, which the latter will have reached due to the respective travel speed (VI) in accordance a setting time constant (EZ1) of a respective machine load regulating procedure, and the reference speed (VS) and/or the reference cutting width (SBS) and/or the reference cutting height (SHS) are so determined therefrom that a machine load which is as equal as possible occurs when travelling over the future co-ordinates (XK1, YK1; KS1, KE1).

5. A method according to one of the preceding claims characterised in that the cadasterised historical data (DH) are linked with year-specific data of the respective crop material or the respective climatic influences and in particular with predetermined initial reference operational values are modified prior to evaluation thereof.

6. A method according to one of the preceding claims characterised in that the cadasterised data (DH) of one or more harvesting lanes (E1, E2) which are adjacent to the harvesting lane (E3) which is to be harvested at present are evaluated by a co-ordinate extrapolation operation in respect of the present travel co-ordinates (KS; X, Y) of the combine harvester on the adjacent co-ordinate or coordinates (K3S, E3; XB1, YB1; XB2, YB2) and for determination of the reference or limit operational data (VS, SBS, SHS), or are used directly as such.

7. A method according to claim 6 characterised in that the cadasterised data (DH) of the respectively adjacent harvesting lanes (E1, E2) in respect of the present co-ordinates (KS, E3; X, Y) of the combine harvester in a respective leading or trailing region, extrapolated on to displacements (V1, V2), occuring in opposite relationship to or in the direction (SR) of the lanes (E1, E2), of respectively mutually similar variations in the data (DH) corresponding to the displacements (V1, V2) on to the present co-ordinates (KS, E3; X, Y) are evaluated to determine the reference or limit operational data (VS, SBS, SHS) or are used directly.

8. A method according to one of the preceding claims characterised in that the reference or limit operational data (VS, SBS, SHS) ascertained from the cadasterised data (DH) are respectively fed directly to a reference value input of an associated regulator or are displayed on a control station video unit (V) or display unit.

9. A method according to claim 8 characterised in that the reference or limit operational data (VS, SBS, SHS) are respectively represented in specific configuration beside the respective associated actual operational values (VI, SHi, SBI) and reference and limit values (S11, S12) respectively preset by the operator, on the control station video unit (V).

10. A method according to one of the preceding claims characterised in that the relative locational co-ordinates are ascertained as direction-oriented travel co-ordinates (KE, KS) with respect to corresponding lane starting locations (EA1, EA2, EA3) in the individual harvesting lanes (E1, E2, E3) by continuous travel measurement from actual travel measurement data (WI).

11. A method according to one of the preceding claims characterised in that the absolute locational co-ordinates (X, Y) of the combine harvester are determined by means of a radio locating apparatus (GPS, DGPS) and continuous travel measurement and transformation is implemented into travel direction-oriented travel co-ordinates (KS, KE) and vice-versa when cadaster data are read or stored.

12. A method according to one of the preceding claims characterised in that the data which are to be cadasterised are all continuously monitored to ascertain whether at least one datum of the last-stored associated data is above or below a preset relative or absolute value, whereupon the respective data are stored with their true co-ordinates (KEW, KSW; XW, YW).

13. A method according to one of the preceding claims characterised in that the reference operational values (VS, SBS, SHS) ascertained from the cadasterised data (DH) are fed respectively in accordance with the nature of a superior regulating loop to the operational regulators of the combine harvester which in turn operate in a subordinate regulating mode.

14. A method according to one of the preceding claims characterised in that location determination and/or cadaster data processing and/or preparation is implemented with a stationary processor (PR) and a locating apparatus (GPS) at the combine harvester and the respective locational co-ordinates (X, Y) are continuously transmitted from same by radio to the stationary processor (PR) and the respectively ascertained historical data (DH) are continuously transmitted by radio to the combine harvester.

15. Apparatus for carrying out the method according to claim 1 characterised in that the combine harvester includes location-determining means (GPS) and travel speed-measuring means and its stored operational data (DH), by a control processor (ST) which contains a program in respect of the method and which addresses and reads historical data (HD) stored in a data cadaster, in anticipatory relationship in each case with the curent locational co-ordinates, and processes same to constitute reference and/or limit operational data (VS, SBS, SHS) which are fed to operational regulators and/or are displayed on a video unit (V).

16. Apparatus according to claim 15 characterised in that installed on the combine harvester is a radio apparatus (F2) which communicates with a further radio apparatus (F2) of a stationary processor (PR) in which the historical data cadaster is disposed, calling up the historical data (HD) or the reference and/or limit operational data (VS, SBS, SHS) ascertained therefrom.

## Revendications

1. Procédé d'exploitation d'une moissonneuse-batteuse qui, aux fins d'optimiser le rendement de récolte de la machine, est commandée en continu de l'extérieur par un utilisateur, à travers un processeur de commande (ST) avec des données de fonctionnement de consigne et/ou des données de fonctionnement de seuil et est régulée de l'intérieur par mesure en continu et exploitation de données de fonctionnement réelles (VI, SBI SHI), en particulier de données de déplacement. selon lequel on mesure en continu les coordonnées de position (X,Y) absolues et/ou relatives de la moissonneuse-batteuse et on mémorise en relation avec celles-ci les données de mesure de rendement (EM) par unité de surface, en particulier sous forme de cadastre de données de rendement (EK), en vue d'une utilisation comme cadastre de données historique (HK), le processeur de commande (ST) de la moissonneuse-batteuse accède au cadastre de données historique (HK) et adresse et lit des données historiques (DH) mémorisées dans ledit cadastre avec les coordonnées de position (X, Y) de la moissonneuse-batteuse combinées aux données de déplacement correspondantes (VI, SBI, SHI) puis détermine à partir de celles-ci de nouvelles données de fonctionnement de consigne ou de seuil (VSN SBSN SHS) et les transmet, caractérisé par le fait que le processeur de commande (ST) adresse et lit les données mémorisées dans le cadastre de données hisiorique (HK) en utilisant chaque fois les coordonnées de position actuelles.

2. Procédé selon la revendication 1, caractérisé par le fait que l'on mesure en continu, en tant que données de fonctionnement réelles, une vitesse de déplacement réelle (VI), une largeur de coupe réelle (SBI) et une quantité récoltée réelle (EMI) et qu'a partir de celles-ci on cadastre les données de mesure de rendement (EM) par unité de surface pour les coordonnées passées (XW, YW, KSW, KEW) du vrai lieu de récolte déterminées à partir des coordonnées courantes (X, Y; KS, KE) et de la vitesse de déplacement réelle (VI) en relation avec un temps de parcours du produit récolté (DT) dans la moissonneuse-batteuse et par le fait que par la suite au même emplacement avec pour coordonnées (XW, YW; KSW, KEW) on lit dans le cadastre de données historique (HK) les données historiques (DH) pour des coordonnées à venir (XK1, YK1; KS1) de la moissonneuse-batteuse que ladite moissonneuse-batteuse aura atteintes avec la vitesse de déplacement d'après une constante de temps réglée (EZ1) d'un processus de régulation de la charge de la machine et qu'on détermine à partir de celles-ci la vitesse de consigne (VS) et/ou la largeur de coupe de consigne (SBS) et/ou la hauteur de coupe de consigne (SHS) de manière à obtenir une charge de la machine aussi régulière que possible lors du passage par les coordonnées à venir (XK1, YK1; KS1) et à éviter une surcharge ou une mise en danger de la machine.

3. Procédé selon la revendication 1 ou 2, caractérisé par le fait que qu'on mesure les pertes de récolte (EVI) courantes et on les cadastre par unité de surface pour les coordonnées vraies (XW, YW; KSW; KEW) et que lors d'une récolte ultérieure au même emplacement (XW, YW) on détermine à partir de celles-ci, pour des coordonnées à venir (XK1, YK1; KS1, KE1), la vitesse de consigne (VS) et/ou la largeur de coupe de consigne (SBS) et/ou la hauteur de coupe de consigne (SHS), de manière à obtenir une perte de récolte par unité de surface aussi faible que possible lors du passage par les coordonnées à venir (XK1, YK1; KS1, KE1).

4. Procédé selon une des revendications précédentes, caractérisé par le fait qu'on cadastre en tant que données de fonctionnement réelles une charge machine réelle mesurée (MLI) pour les coordonnées vraies (XW, YW, KSW, KEW) déterminées à partir des coordonnées courantes (X, Y; KS; KE) et de la vitesse de déplacement réelle (VI) en relation avec un temps de parcours du produit récolté (ET) jusqu'a la mesure de la charge et que par la suite au même emplacement avec pour coordonnées (XW, YW, KSW, KEW). on lit les données historiques (DH) par rapport à de coordonnées à venir (XK1, YK1) de la moissonneuse-batteuse que celle-ci aura atteintes à la vitesse de déplacement (VI) d'après une constante de temps réglée (EZ1) d'un processus de réglage de la charge de la machine et qu'on détermine à partir de celles-ci la vitesse de consigne (VS) et/ou la largeur de coupe de consigne (SBS) et/ou la hauteur de coupe de consigne (SHS) de manière à obtenir une charge de la machine aussi régulière que possible lors du passage par les coordonnées à venir (XK1, YK1; KS1, KE1)

5. Procédé selon une des revendications précédentes, caractérisé par le fait que l'on combine des données historiques (DH) cadastrées avec des données spécifiques d'année pour le produit récolté ou pour les conditions atmosphériques en particulier on les modifie avant traitement avec des valeurs de fonctionnement initiales ou de consigne.

6. Procédé selon une des revendications précédentes, caractérisé par le fait qu'on exploite les données cadastrées (DH) d'un ou de plusieurs couloirs de récolte (E1, E2) voisins du couloir de récolte (E3) à récolter, par une extrapolation de coordonnées des coordonnées de trajet (KS; X; Y) actuelles de la moissonneuse-batteuse sur les coordonnées voisines (K3S, E3; XB1, YB1; XB2, YB2), pour déterminer les données de fonctionnement de consigne ou de seuil (VS; SBS; SHS) ou qu'on les utilise directement en tant que telles.

7. Procédé selon la revendication 6, caractérisé par le fait qu'on exploite les données cadastrées (DH) des couloirs de récolte (E1, E2) voisins par rapport aux coordonnées courantes (KS, E3; X, Y) de la moissonneuse-batteuse, des décalages (V1, V2) de variations mutuellement semblables des données (DH) dans une zone précédente ou à venir, à l'opposé ou dans la direction (SR) des couloirs (E1, E2), étant extrapolés sur les coordonnées courantes (KS, E3; X, Y) en accord avec les décalages (V1, V2), aux fins de déterminer les données de fonctionnement de consigne ou de seuil (VS, SBS, SHS) ou on les utilise directement.

8. Procédé selon une des revendications précédentes, caractérisé par le fait que les données de fonctionnement de consigne ou de seuil (VS, SBS, SHS) déterminées à partir des données cadastrées (DH) sont transmises directement à une entrée de valeur de consigne d'un régulateur associé ou sont visualisées sur un écran (V) ou un appareil indicateur du poste de conduite.

9. Procédé selon revendication 8, caractérisé par le fait que les données de fonctionnement de consigne ou de seuil (VS, SBS, SHS) formées spécifiquement sont affichées sur l'écran (V) dans le poste de conduite à côté des données de fonctionnement réelles (VI, SHI, SBI) associées et de valeurs de consigne et de seuil (S11, S12) fixées par l'utilisateur.

10. Procédé selon une des revendications précédentes, caractérisé par le fait qu'on détermine les coordonnées de position relatives en tant que coordonnées de trajet (KE, KS) orientées par rapport à des points de départ de couloirs (EA1, EA2, EA3) correspondant dans les différents couloirs (E1, E2, E3), par mesure de trajet en continu, à partir de données de trajet réelles (WI).

11. Procédé selon une des revendications précédentes, caractérisé par le fait qu'on détermine les coordonnées de position absolues (X, Y) de la moissonneuse-batteuse à l'aide d'un dispositif de locatisation radio (GPS, DGPS) et mesure en continu du trajet et qu'on procède à une transformation en coordonnées de orientées dans la direction de déplacement (KS; KE) et inversement lorsque des données de cadastre doivent être lues ou mémorisées.

12. Procédé selon une des revendications précédentes, caractérisé par le fait qu'on surveille en continu toutes les données devant être cadastrées afin de détecter si au moins une donnée parmi les données mémorisées en dernier dépasse vers le haut ou vers le bas d'une valeur relative ou absolue prédéfinie, à la suite de quoi on mémorise les données concernées avec leurs coordonnées vraies (KEW, KSW; XW, YW).

13. Procédé selon une des revendications précédentes, caractérisé par le fait que les données de fonctionnement de consigne (VS, SBS, SHS) déterminées à partir des données cadastrées (DH) sont transmises chaque fois sous forme d'une boucle de régulation supérieure aux régulateurs de fonctionnement de la moissonneuse-batteuse qui de leur côté assurent la régulation de manière subordonnée.

14. Procédé selon une des revendications précédentes, caractérisé par le fait que la détermination de la position et/ou le traitement et/ou la mise à disposition des données de cadastre sont réalisés au moyen d'un processeur stationnaire (PR) et d'un appareil de localisation (GPS) côté moissonneuse-batteuse et que les coordonnées de position (X, Y) concernées sont transmises par radio de la moissonneuse-batteuse au processeur stationnaire (PR) et les données historiques (DH) détermines sont transmises en continu par radio à la moissonneuse-batteuse.

15. Dispositif pour la mise en oeuvre du procédé selon la revendication 1, caractérisé par le fait que la moissonueuse-batteuse comporte des moyens de localisation (GPS) et des moyens de mesure de la vitesse de déplacement et les données de fonctionnement (DH) mémorisées de celle-ci sont transmises aux régulateurs de fonctionnement et/ou visualisées sur un écran (V) par un processeur de commande (ST) qui contient un programme selon le procédé et qui adresse et lit en fonction de coordonnées de position actuelles, des données historiques (DH) mémorisées dans un cadastre de données et les traite pour former des données de fonctionnement de consigne et/ou de seuil (VS, SBS, SHS).

16. Dispositif selon la revendication 15, caractérisé par le fait qu'un appareil radio (F2) est installé sur la moissonneuse-batteuse, lequel appareil communique avec un autre appareil radio (F1) d'un processeur stationnaire (PR) dans lequel se trouve le cadastre de données historique, pour appeler les données historiques (DH) ou les données de fonctionnement de consigne et/ou de seuil (VS; SBS; SHS) déterminées à partir de celles-ci.
